Europäisches Patentamt

European Patent Office

Office européen des brevets

(19)

(11) Publication number: **0 279 087 B1**

## (12) EUROPEAN PATENT SPECIFICATION

(45) Date of publication of patent specification: **13.03.91**

(51) Int. Cl.⁵: **G05G 9/00, G05G 1/04, B60K 20/04**

(21) Application number: **87202626.5**

(22) Date of filing: **24.12.87**

(54) **Guide and operating system for the control lever of a motor car transmission.**

(30) Priority: **21.01.87 NL 8700145**

(43) Date of publication of application:
**24.08.88 Bulletin 88/34**

(45) Publication of the grant of the patent:
**13.03.91 Bulletin 91/11**

(84) Designated Contracting States:
**DE FR GB IT NL SE**

(56) References cited:
**US-A- 2 983 160**
**US-A- 3 570 320**
**US-A- 4 118 999**
**US-A- 4 503 730**

**PATENT ABSTRACTS OF JAPAN, vol. 7, no. 48 (P-178)[1193], 24th February 1983; & JP-A-57 196 326 (NISSAN JIDOSHA K.K.) 02-12-1982**

(73) Proprietor: **Volvo Car B.V.**
**Steenovenweg 1**
**NL-5708 HN Helmond(NL)**

(72) Inventor: **Verheijden, Dirk Jan**
**11, Cantalpad**
**NL-5672 DL Eindhoven(NL)**

(74) Representative: **Timmers, Cornelis Herman Johannes et al**
**EXTERPATENT B.V. P.O. Box 90649**
**NL-2509 LP 's-Gravenhage(NL)**

## Description

The invention relates to a guide and operating system for the control lever of a motor car transmission which is provided with a handle and can be moved in a plane about a point of an axis of rotation.

Such a system according to the state of the art comprises a large number of individual parts, such as: the selection lever itself with handle, the support thereof, the elements for locating the lever in the various possible control positions and the elements for blocking the lever in various positions in such a way that it cannot be moved until the blocking is disengaged, so that the lever cannot be inadvertently moved into an undesired position, a control panel which is arranged in the interior of the car and has markings - preferably illuminated - of the various possible positions and in particular the position engaged, and also a suitable coupling with the operating element of the transmission and means for absorbing the reaction forces occurring during the moving of the lever. All these elements must in some way or other be interconnected and fixed to the body, and it all in general requires complicated and time-consuming fitting and adjustment and regular maintenance.

The object of the invention is to produce such a system which comprises only a few parts combined into a single build-in component (a "cradle"), where the unit is easy to install and is substantially maintenance-free. The object is to produce such a "cradle" of particularly sturdy and universal design which can easily absorb the forces acting thereon during use, in particular the reaction forces on operation of the transmission. Another objective is to produce a design which can be adapted to left-hand or right-hand drive vehicles without radical alterations.

This object is achieved according to the invention with the measures described in the characterizing part of claim 1.

Advantageous embodiments are described in the sub-claims.

Making the house of plastic permits a design which would not be possible if it were made of metal and in practice results in all functions which have to be fulfilled with such a ¨cradle¨ being achieved with only a small number of parts. Good wear and lubrication properties are obtained through the use of plastic, and the various parts are light but sturdy, while the assembly of the few parts is very simple. The use of plastic results in a greater soundproofing and vibration-absorbing capacity, and the absence of corrosion phenomena during storage and after fitting. The plastics, suitable for use of the invention, withstand temperaturevariations very well, exhibit great dimensional stability during variations in temperature and humidity, and show little aging. This provides the certainty that even after many years of use the cradle and in particular the blocking and locking mechanism thereof will still function reliably.

Due to the fact that the counter-bearing for the transmission element coupled to the lever is directly connected to the bottom which is to be fixed on the body of the car the reaction forces generated on operation of the transmission are diverted directly and without stressing of other parts. Adjusting the operating element is also simple, since the position of the counter-bearing after fitting of the cradle is clearly determined and cannot change anymore.

The invention will be explained with reference to the drawings, in which:

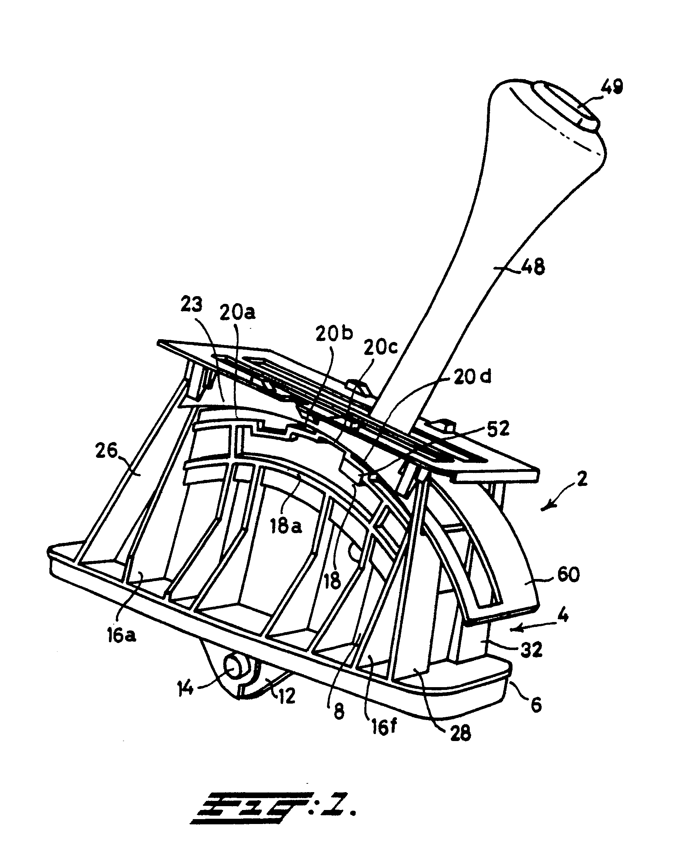

Figure 1 is a perspective view of an embodiment of the invention;

Figure 2 is also a cross section through this embodiment;

Figure 3a is a cross section through this embodiment;

Figure 3b is a cross section through part of this embodiment;

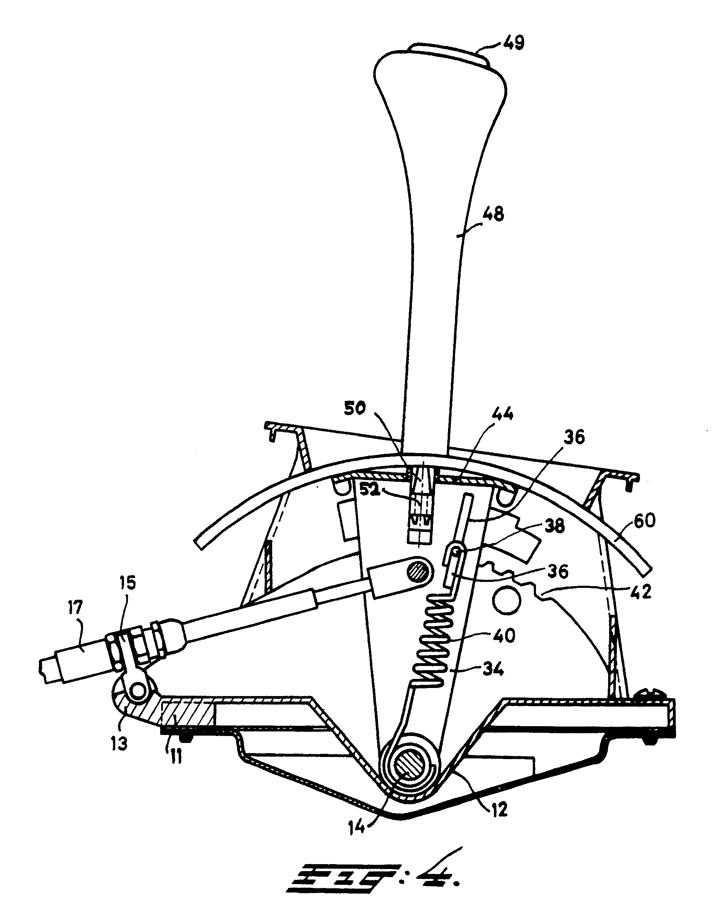

Figure 4 is a partial view, partial longitudinal section through this embodiment;

Figure 5 is a side view of one of the walls, and

Figure 6 is a top view.

The so-called "cradle for a control lever", shown in the figures and indicated in its entirety by the reference number 2 comprises a housing 4 having the bottom parts 6, 6a and 6b and the upright walls 8, 10. The two parts of the bottom 6 are connected to each other by means of a recessed, hollow part 12 containing a hinge pin 14, the function of which will be explained in further detail below. Each of the walls 8 and 10 is connected to the floor 6 by means of reinforcement ribs 16a-16f, so that a rigid and yet light unit is formed.

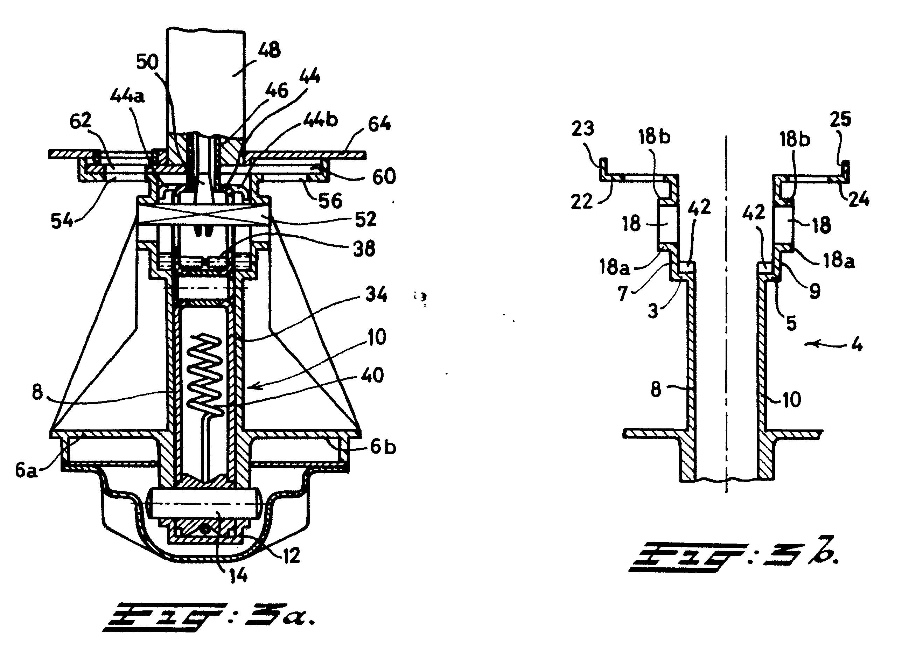

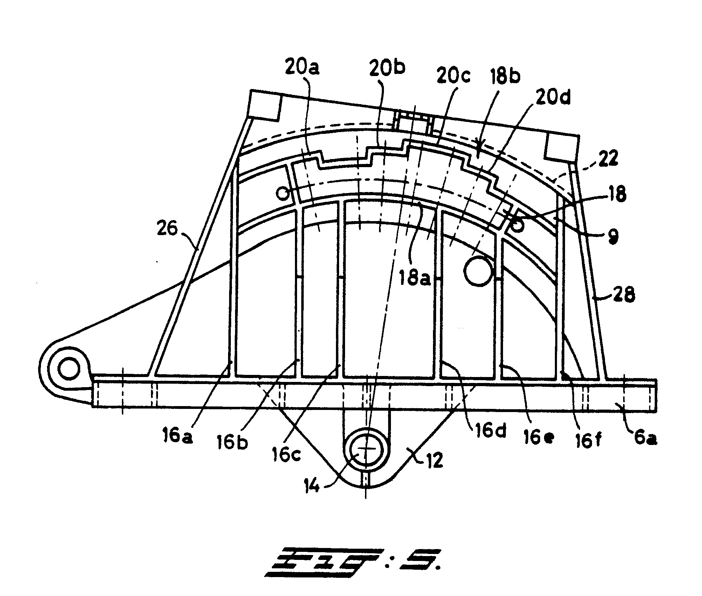

By means of outward-directed wall parts 3 and 5 - see Figure 3b in particular - provided with locking recesses 42 (the function of which will be explained below), the walls 8 and 10 run on into the upright wall parts 7 and 9, in each of which - see in particular Figure 5 - a circular arc-shaped guide track 18 is obtained, of which the lower, outward-directed contour 18a is smooth, but of which the upper, outward directed contour 18b is stepped and has a number of blocking recesses 20a-20d. The function of these recesses will be explained further below.

Curved faces 22 and 24, facing away from the longitudinal plane of symmetry of the housing, extend from the upper ends of the two side walls 7 and 9 respectively, each having adjoining it an upright face 23, 25, while the respective ends of the faces 23 and 25 are connected by means of the end faces 26, 28 and 30, 32 respectively to the lower parts 6a, 6b. The bottom 6 continues in an extension 11 having a nesting part 13 for fastening thereto a supporting part 15 of a force transmission element, also to be discussed further, for example a Bowden cable 17.

Located between the upright walls 8 and 10 and in the recessed part 12, rotatable about the shaft 14, is a U-shaped hinge connection 34 with a radial longitudinal groove 36, which contains a stop pin 38 which is under the action of a tension spring 40 disposed between said pin 38 and the shaft 14. The ends of the pin 38 projecting from the hinge connection mate with the locking recesses 42 in the wall parts 3 and 5. Each of these recesses 42 thus marks a particular position of the hinge connection 34.

This hinge connection 34 is closed off at the top side by the transverse plate 44 with flanged end edges 44a, 44b and this end plate 44 is connected by means of the tube 46 to the gear lever 48. Through the tube 46 goes a locking pin 50 which is connected to an oblong blocking element 52 with square cross section which mates with the blocking recesses 20a-20d. A spring, not shown in the figures, which is located in the lever presses the blocking element 52 into the top position: it can be pressed down by means of the pressure pin 50 by depressing the push-button 49 provided on the top side of the gear lever 48.

The curved faces 22 and 24 are each provided with a series of openings, two of which can be seen in cross section in Figures 3a and 3b respectively: opening 54 in the face 22 and opening 56 in the face 24. Each such series of opening can be illuminated by means of a suitable illumination element (not shown) which is not the subject of the present application.

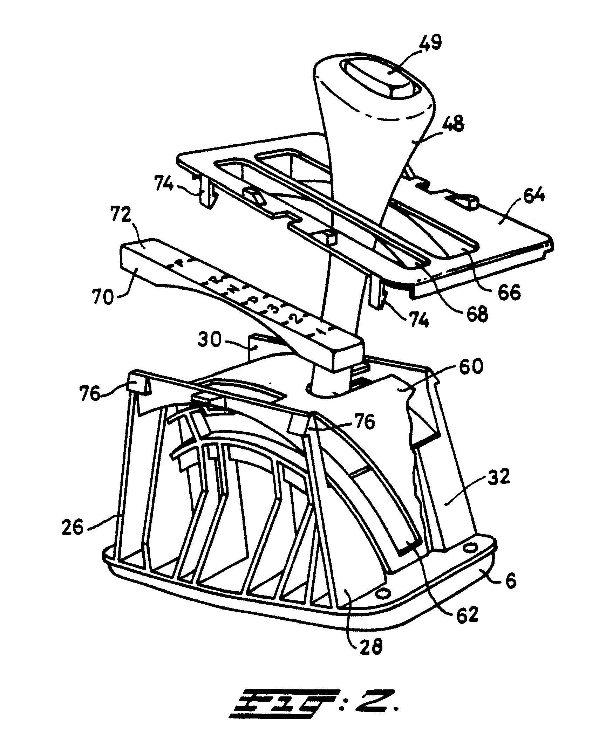

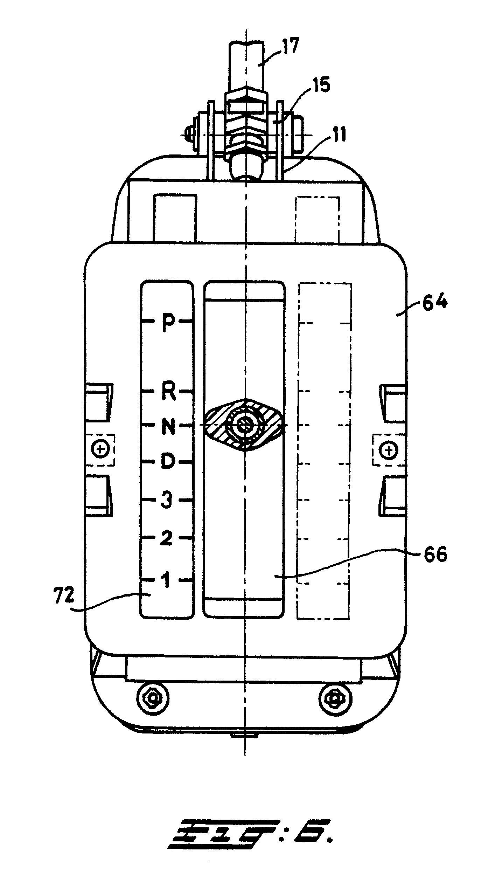

A curved plate 60 (shown partially cut away in Figure 2), provided with an oblong, eccentric opening 62 situated above the openings in the faces 22 and 24 is coupled to the gear lever 48 and thus moves with it. It contains a translucent coloured foil (for example, coloured green) having a sector in a contrasting colour (for example, red) for marking the different positions of the gear lever 48. The top side of the housing is covered with the flat cover plate 64, containing a central slit 66 for allowing through the gear lever 48 and a slit 68 situated at the side thereof and having underneath it a holder 70 for foil 72 with translucent markings indicating the various control positions. Figure 6 gives an example in which these markings are: the parking position P, the reverse position R, the neutral position N, the Drive position, and the positions "3", "2" and "1". The plate 64 is fixed on the housing by means of the hooks 74, which engage behind the ridges 76 fixed on the housing. Various advantages are obtained with the design. With the same set of parts the whole unit is suitable for either left-hand or right-hand drive, simply through fitting the illumination element in the correct place and placing the cover plate 64 with marker part 70 in the correct position. When the button 49 on the top of the gear lever 48 is depressed, the blocking element 52 is free from the blocking recesses 20a-20d and the gear lever can thus be put in any desired position, but when the button 49 is released with the gear lever in the P position the blocking element falls into the blocking recess 20a and the transmission is thus blocked in this position. By depressing the button it is possible to take the gear lever into the R position and from there without depressing of the button into the N position; the D and 3 positions can be engaged from this position without depressing of the button, but for changing into the 2 and 1 positions from these positions deliberate depressing of the button 49 is again necessary. On the other hand, starting from position 1, it is possible without further ado to change to positions 2, 3 and D.

## Claims

1. Guide and operating system for the control lever (48) of a motor car transmission which is provided with a handle and can be moved in a plane about a point of an axis of rotation, characterized by a plastic housing of U shaped cross section (4) which is symmetrical in cross section relative to said plane and has a bottom (6) with a recessed part (12) carrying the rotation shaft (14) of the handle, and which has two side walls (8, 10) projecting therefrom which are connected, by means of reinforcement ribs (16a...16f) standing transversely thereto, to bottom parts projecting on either side of the side walls and provided with fixing openings, while a circular arc-shaped guide track (18) having as the center point said point of the axis of rotation is recessed in each side wall, the upper contour (18b) of which is designed with a series of control position blocking recesses (20a, 20d), mating with a blocking element (52) which is under spring tension and is operated by an operating button (49) in the handle, while formed on the inside of each wall is a series of recesses (42) situated on a circular arc centered about the said point of the axis of rotation and marking the various control positions, said recesses (42) being for cooperating with a stop element (38) which is under spring tension and is positioned transversely to the said longitudinal plane, the housing containing a U-shaped hinge piece (34) whose upward-facing cross leg bears the control lever (48), and the sides of which have near the lower ends thereof bores for accommodation of the rotation shaft (14) whoses axis is the axis of rotation, while in each of the sides there is a first and a second oblong guide recess (36), the respective longitudinal axes of which pass through the point of the axis of rotation and serve to take the blocking element (52) and the stop element (38) respectively.

2. System according to Claim 1, characterized in that the bottom carries on at least one of the ends fixing means (11, 13, 15) serving as the counter-bearing for a force transmission element coupled with the lever.

3. System according to Claim 2, characterized in that said fixing means are formed by a thickened part (13) provided with a bore.

4. System according to Claims 1-3, characterized in that the two side walls (8, 10) on the respective end edges thereof are connected to end walls (26, 28, 30, 32) extending from the projecting bottom parts and facing away from the longitudinal plane of symmetry, the walls of each pair of end walls situated at one side of the longitudinal plane being connected to each other above the series of stepped recesses by means of a circular curved surface (22, 24) in which marker openings (54, 56), which correspond to the control positions and which can be illuminated, are provided.

5. System according to Claim 4, characterized in that each side face is bounded on the outside edge by an upright end face with flat top edge to support a cover plate (64) which is provided with an oblong central opening (66) for the control lever (48) and, an adjacent oblong opening (68) underneath which, resting against the underside of the cover plate, is an oblong plate (72) on which the control positions are marked in translucent sections, and also a supporting part (70) fixed to the underside of the cover plate by means of snap connections (74) and provided with corresponding recesses.

6. System according to Claims 1 to 5, characterized in that the width of the transverse leg of the hinge piece is smaller than the distance between the housing walls and hook-shaped, flanged guide lips, mating with the housing walls, project from said transverse leg.

## Revendications

1. Système de guidage et d'actionnement pour le levier de commande (48) d'une transmission de véhicule automobile, muni d'un manche et apte à être déplacé dans un plan autour d'un point d'un axe de rotation, caractérisé par un carter en matière plastique (4) de section transversale en forme de U, qui, en section transversale, est symétrique par rapport audit plan et comporte un fond (6) pourvu d'une partie en creux (12) portant l'arbre de rotation (14) du manche, et deux parois latérales (8, 10) faisant saillie sur ledit fond et reliées, au moyen de nervures de renforcement (16a... 16f) qui s'étendent transversalement par rapport à celles-ci, à des parties inférieures qui font saillie de part et d'autre des parois latérales et sont munies de trous de fixation, une glissière de guidage en forme d'arc de cercle (18) qui possède comme point central ledit point de l'axe de rotation, étant définie en creux dans chacune des parois latérales, glissière de guidage (18) dont le profil supérieur (18b) est formé d'une série d'encoches de blocage de positions de commande (20a, 20d) qui s'accouplent avec un élemént de blocage (52) soumis à une tension élastique et actionné par un bouton d'actionnement (49) prévu dans le manche, tandis qu'il est prévu, définie sur la partie intérieure de chacune des parois, une série d'encoches (42) situées sur un arc de cercle centré sur ledit point de l'axe de rotation et marquant les différentes positions de commande, lesdites encoches (42) étant destinées à coopérer avec un élément d'arrêt (38) soumis à une tension élastique et positionné transversalement par rapport audit plan longitudinal, et le logement renfermant une pièce d'articulation en forme de U (34) dont la branche transversale tournée vers le haut supporte le levier de commande (48), et dont les côtés présentent, à proximité de leurs extrémités inférieures, des perçages destinés à recevoir l'arbre de rotation (14), dont l'axe correspond à l'axe de rotation, tandis que, dans chacun des côtés, sont ménagées des première et seconde cavités de guidage oblongues (36) dont les axes longitudinaux respectifs passent par le point de l'axe de rotation et qui servent à recevoir respectivement l'élément de blocage (52) et l'élément d'arrêt (38).

2. Système selon la revendication 1, caractérisé en ce que le fond porte, sur l'une au moins de ses extrémités, des moyens de fixation (11, 13, 15) servant de contre-butée pour un élément de transmission de force accouplé avec le

4

levier.

3. Système selon la revendication 2, caractérisé en ce que lesdits moyens de fixation sont définis par une partie épaissie (13) pourvue d'un perçage.

4. Système selon les revendications 1 à 3, caractérisé en ce que les deux parois latérales (8, 10) sont, sur leurs bords d'extrémité respectifs, reliées à des parois d'extrémité (26, 28, 30, 32) qui s'étendent depuis les parties inférieures saillantes en étant orientées à distance du plan de symétrie longitudinal, les parois de chaque paire de parois d'extrémité située d'un côté du plan longitudinal étant reliées entre elles au-dessus de la série d'encoches étagées par une surface circulaire courbe (22, 24) dans laquelle sont définies des fenêtres de marquage (54, 56) qui correspondent aux positions de commande et peuvent être éclairées.

5. Système selon la revendication 4, caractérisé en ce que chacune des faces latérales est, sur son bord extérieur, délimitée par une face d'extrémité verticale munie d'un bord supérieur plan pour supporter une plaque formant couvercle (64) pourvue d'une ouverture oblongue centrale (66) pour le levier de commande (48) et d'une ouverture oblongue adjacente (68) au-dessous de laquelle se trouve, en appui contre le dessous de la plaque formant couvercle, une plaque oblongue (72) sur laquelle les positions de commande sont marquées dans des portions translucides, et également un élément de support (70) fixé sur le dessous de la plaque formant couvercle au moyen d'organes d'assemblage par encliquetage (74) et pourvu d'évidements correspondants.

6. Système selon les revendications 1 à 5, caractérisé en ce que la largeur de la branche transversale de la pièce d'articulation est inférieure à la distance qui sépare les parois du carter, tandis que des lèvres de guidage à rebords, en forme de crochet, s'accouplant avec les parois du carter, font saillie sur ladite branche transversale.

## Ansprüche

1. Führungs- und Betriebssystem für den Steuerhebel (48) eines Kraftfahrzeuggetriebes, wobei dieser Steuerhebel mit einem Handgriff versehen und in einer Ebene um einen Punkt einer Drehachse bewegbar ist,
gekennzeichnet durch

ein Kunststoffgehäuse (4) mit einem U-förmigen Querschnitt, welches im Querschnitt relativ zu der vorgenannten Ebene symmetrisch ist und einen Boden (6) mit einem vertieften Teil (12), das die Drehwelle (14) des Handgriffes trägt, sowie zwei vom Boden vorspringende seitliche Wände (8, 10) aufweist, die mit Hilfe von hierzu querstehenden Verstärkungsrippen (16a . . . 16f) mit Bodenteilen verbunden sind, die auf jeder Seite der seitlichen Wände hervorstehen und mit Befestigungsöffnungen versehen sind, während eine kreisbogenförmige Führungsbahn (18), deren Mittelpunkt durch den vorgenannten Punkt der Drehachse gebildet ist, in einer jeden seitlichen Wand ausgespart und in ihrer oberen Kontur (18b) mit einer Reihe von Steuerpositionblockierungs-Absätzen (20a-20d) versehen ist, die mit einem Blockierungselement (52) in Eingriff gelangen, welches unter Federspannung steht und durch einen Betätigungsknopf (49) in dem Handgriff betätigt wird, während ferner auf der Innenseite einer jeden Wand eine Reihe von Ausnehmungen (42) ausgebildet ist, die auf einem mit dem vorgenannten Punkt der Drehachse zentrierten Kreisbogen angeordnet sind und die verschiedenen Steuerpositionen markieren und zum Zusammenwirken mit einem Anschlagelement (38) dienen, das unter Federspannung steht und quer zu der vorgenannten Längsebene angeordnet ist, wobei ferner das Gehäuse ein U-förmiges Gelenkteil (34) aufweist, dessen nach oben weisender Quersteg den Steuerhebel (48) trägt und dessen Seiten in der Nähe ihrer unteren Enden mit Bohrungen zum Unterbringen der Drehwelle (14) versehen sind, deren Achse die Drehachse bildet, während in jeder der Seiten erste und zweite, längliche Führungsöffnungen (36) vorhanden sind, deren jeweiligen Längsachsen durch den Punkt der Drehachse verlaufen und welche dazu dienen, das Blockierungselement (52) bzw. das Anschlagelement (38) aufzunehmen.

2. System nach Anspruch 1,
dadurch gekennzeichnet,
daß der Boden an mindestens einem der Enden Befestigungsmittel (11, 13, 15) aufweist, die als Gebenlager für ein kraftübertragendes, mit dem Hebel gekoppeltes Element dienen.

3. System nach Anspruch 2,
dadurch gekennzeichnet,
daß die Befestigungsmittel durch ein verstärktes Teil (13) gebildet sind, das mit einer Bohrung versehen ist.

4. System nach den Ansprüchen 1-3,

dadurch gekennzeichnet,
daß die zwei seitlichen Wände (8, 10) an ihren jeweiligen Endkanten mit endseitigen Wänden (26, 28, 30, 32) verbunden sind, welche sich von den hervorstehenden Bodenteilen aus erstrecken und von der längsgerichteten Symmetrieebene weg gerichtet sind, wobei die Wände eines jeden Paares von endseitigen, auf je einer Seite der Längsebene angeordneten Wänden oberhalb der Reihe der abgestuften Absätze mit Hilfe einer kreisförmig gebogenen Oberfläche (22, 24) miteinander verbunden sind, in der Markierungsöffnungen (54, 56) vorgesehen sind, welche den Steuerpositionen entsprechen und die beleuchtet werden können.

5. System nach Anspruch 4,
   dadurch gekennzeichnet,
   daß eine jede Seitenfläche an der Außenkante durch eine aufwärtsgerichtete Endfläche mit einer flachen Oberkante begrenzt ist, um eine Abdeckplatte (64) zu tragen, welche mit einer länglichen mittleren Öffnung (66) für den Steuerhebel (48) sowie mit einer benachbarten länglichen Öffnung (68) versehen ist, unterhalb welcher eine sich gegen die Unterseite der Abdeckplatte abstützende längliche Platte (72), auf der die Steuerpositionen in durchsichtigen Abschnitten markiert sind, und ferner ein Trägerteil (70) angeordnet sind, das an der Unterseite der Abdeckplatte mittels Schappverbindungen (74) befestigt und mit entsprechenden Ausnehmungen versehen ist.

6. System nach den Ansprüchen 1-5,
   dadurch gekennzeichnet,
   daß die Breite des Quersteges des Gelenkteiles kleiner als der Abstand zwischen den Gehäusewänden ist und daß hakenförmige, umgebogene Führungslippen, die von diesem Quersteg aus vorspringen, mit den Gehäusewänden in Eingriff stehen.

*Fig:1.*

$\mathit{FIG:2.}$

Fig. 3b.

Fig. 3a.

FIG: 4.

EP 0 279 087 B1

FIG:5.

11

EP 0 279 087 B1

FIG:6.

12